# EUROPÄISCHE PATENTSCHRIFT

(11) **EP 2 406 053 B1**
(45) Veröffentlichungstag und Bekanntmachung des Hinweises auf die Patenterteilung: **16.01.2013**
(21) Anmeldenummer: 10709692.7
(22) Anmeldetag: 11.03.2010
(51) Int. Cl.: B29C 45/50

(54) **SPRITZGIESSMASCHINE ZUR VERARBEITUNG VON KUNSTSTOFFEN MIT EINER ELEKTROMOTORISCHEN ANTRIEBSEINHEIT**
INJECTION MOLDING MACHINE FOR PROCESSING PLASTICS WITH AN ELECTRIC MOTOR DRIVE UNIT
UNE MACHINE DE MOULAGE PAR INJECTION POUR LA TRANSFORMATION DE MATIÈRES SYNTHÉTIQUES AVEC UNE UNITÉ D'ENTRAÎNEMENT ÉLECTROMOTRICE

(30) Priorität: 12.03.2009 DE 102009012482
(43) Veröffentlichungstag der Anmeldung: 18.01.2012
(73) Patentinhaber: Keinath, Renate, 72336 Balingen (DE)
(72) Erfinder: HEHL, Karl, verstorben (DE)
(74) Vertreter: Reinhardt, Harry
(86) Internationale Anmeldenummer: PCT/EP2010/001556
(87) Internationale Veröffentlichungsnummer: WO 2010/102828

(56) Entgegenhaltungen:
- EP-A1- 1 219 403
- EP-A2- 1 162 053
- WO-A1-01/89799
- DE-A1- 19 605 747
- DE-B3-102004 023 837
- DE-B3-102006 007 438
- DE-C1- 10 222 748
- DE-C1- 19 731 833
- US-A- 5 645 868
- HOLGER SCHUNK ET AL: "Antrieb einer Kunststoffspritzgussmaschine mit nur einem Motor" 20040401, Bd. 2004-04, 1. April 2004 (2004-04-01), Seite 122, XP007009592

## Beschreibung

Die Erfindung betrifft eine Spritzgießeinheit für eine Spritzgießmaschine zur Verarbeitung von Kunststoffen und anderen plastifizierbaren Massen wie pulvrigen oder keramischen Massen nach dem Oberbegriff des Anspruches 1.

Eine derartige Spritzgießeinheit ist aus der DE 198 31 482 C1 bekannt, wobei dort zwischen Einspritzmotor und Dosiermotor eine Trennebene vorgesehen ist, die den Einflussbereich der beiden elektromechanischen Antriebe voneinander trennt. Als Dosiermotor kann ein Elektromotor mit Rotor und Stator verwendet werden. Der aus Sicht der Plastifiziereinheit hinter dem Dosiermotor liegende Einspritzmotor ist durch einen Spindelantrieb gebildet, der an einem Abstützelement gelagert ist. Die beide Motoren tragende Einspritzbrücke ist an Holmen geführt, die rückseitig über das Abstützelement für den Spindelantrieb einen Kraftrahmen bilden.

Die WO 2008/052959 A1 zeigt eine kompakt bauende Antriebsvorrichtung für eine Spritzgießmaschine, mit einem elektromechanischen Einspritzmotor und einem elektromechanischen Dosiermotor. Beide Hohlellenmotoren wirken auf eine den Motoren gemeinsame Welle ein. Zum Einspritzen muss diese Antriebsvorichtung daher mit dem angetriebenen Dosiermotor einen Gegenhalt für den Einspritzmotor bilden. Dadurch muss nicht nur der Dosiermotor auf ein größeres Drehmoment als an sich erforderlich dimensioniert werden, sondern es steigt auch der Gesamtenergieverbrauch des Systems.

Aus der EP 0 576 925 A1 ist eine Spritzgießeinheit bekannt, bei der zwei flüssigkeitsgekühlte Servomotoren für das Düsenfahren, also für das Anlegen der Spritzgießeinheit an einem Formträger und für das Einspritzen mit ihren Wirkachsen miteinander fluchtend hintereinander angeordnet sind. Der Dosiermotor, mit dem die Rotation des Fördermittels, also der Förderschnecke erfolgt, ist an einem gesonderten Abstützelement gelagert.

Die DE 10 2006 007 438 B3 zeigt einen Antrieb für einen Spritzgießeinheit, der zum Dosieren und Einspritzen einen einzigen Hohlwellenmotor und bedarfsweise einen Hilfsantrieb aufweist. Der Hohlwellenmotor lagert zwei Wellen, die über Vielkeilverbindungen gelagert auch axiale Bewegungen umsetzen können. Dosieren und Einspritzererfolgt seriell abwechselnd mit ein und demselben Hohlwellenmotor. Um die Bewegungsabläufe voneinander zu trennen, sind die Einflusszonen der beiden Teile des Motors durch ein Axiallager in der angetriebenen Welle voneinander getrennt. Zudem ist für die reine Dosierbewegung ein Freilauf im vorderen Teil des Hohlwellenmotors vorgesehen, der in Verbindung mit einem Bremsmittel betätigt werden kann, wenn das Einspritzen mit dem hinteren Teil des Hohlwellenmotors erfolgt.

Die DE 10 2007 027 212 A1 schlägt eine Antriebsvorrichtung für eine Spritzgießeinheit vor, bei der eine Antriebsspindel zum Dosieren und Einspritzen einen Gewindeabschnitt aufweist, der mit einer angetriebenen Spindelmutter in Eingriff steht. Eine weitere Spindel ist von einem zugeordneten Antriebsmotor drehend antreibbar, die mit der Antriebsspindel zusammenwirkt. Die beiden Spindeln sind miteinander getrieblich über eine Gewindeverbindung gekoppelt.

### Aufgabe der Erfindung

Ausgehend von diesem Stand der Technik liegt der vorliegenden Erfindung die Aufgabe zu Grunde, eine alternative, kompakte und energiesparende Spritzgießeinheit zur Verfügung zu stellen.

Diese Aufgabe wird durch eine Spritzgießeinheit mit den Merkmalen des Anspruches 1 gelöst.

Bei dieser Anordnung wird die im Stand der Technik bekannte feste Verbindung zwischen aneinandergrenzenden Motoren aufgelöst, jedoch wird die Spindel des Einspritzmotors unmittelbar mit dem Dosiermotor und zwar mit dem drehbaren Teil des Dosiermotors fest verbunden. Um dennoch eine teilweise kraftentkoppelte Bewegung der beiden Motoren zu ermöglichen, wird der Dosiermotor in eine Drehrichtung durch einen Freilauf blockiert. Dadurch ergibt sich ein mechanisch einfacher Aufbau, der dennoch den bei der Herstellung von Spritzteilen bestehenden Anforderungen genügt und das von der Einspritzbewegung aufgebrachte Drehmoment auf den Dosiermotor energielos abkoppelt.

Der Freilauf ist im Gehäuse des Dosiermotors abgestützt, der seinerseits vorzugsweise in einer Einspritzbrücke gelagert ist, an deren Flanke die Holme gelagert sind, über die die Spritzgießeinheit an der Formschließeinheit anlegbar ist. Dadurch ergibt sich bei der Freilauf-Blockade ein ausreichendes Abstützmoment über die äußeren Führungen, so dass der Drehmomentgegenhalt für die Einspritzspindel passiv und damit energiesparend während der Einspritzbewegung aufgebracht werden kann, bei der die größten Kräfte, sprich Momente wirken.

Da sich vorzugsweise die beiden Motoren rückseitig an einem Abstützelement abstützen, kann dort durch Kraftmessmittel in Form zum Beispiel einer Kraftmessmembran der Staudruck und Einspritzdruck auf zuverlässige und günstige Weise gemessen werden.

Weitere Vorteile ergeben sich aus den Unteransprüchen und der nachfolgenden Beschreibung.

Im Folgenden wird die Erfindung an Hand eines in den Figuren dargestellten Ausführungsbeispiels näher erläutert. Es zeigen:

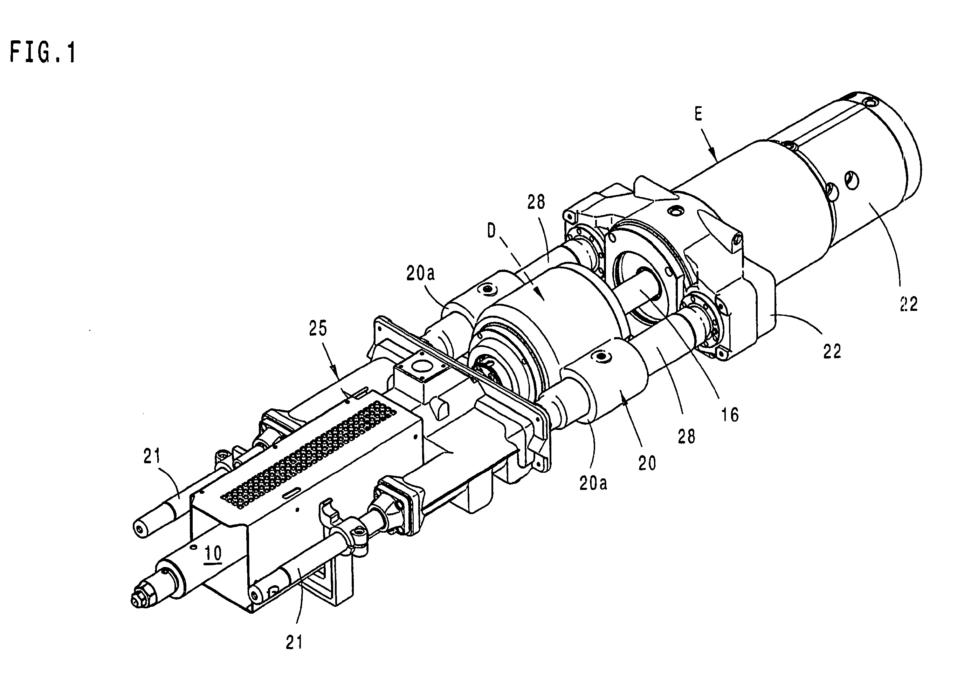

- Fig. 1: eine dreidimensionale Ansicht der Spritzgießeinheit,
- Fig. 2: einen horizontalen Schnitt durch die Spritzgießeinheit in Höhe von Förderschnecke und Holmen mit schematisch dargestellter Formschließeinheit,
- Fig. 3: einen vergrößerten Ausschnitt aus Fig. 2 im Bereich von Dosiermotor und Einspritzmotor.

Die Erfindung wird jetzt beispielhaft unter bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

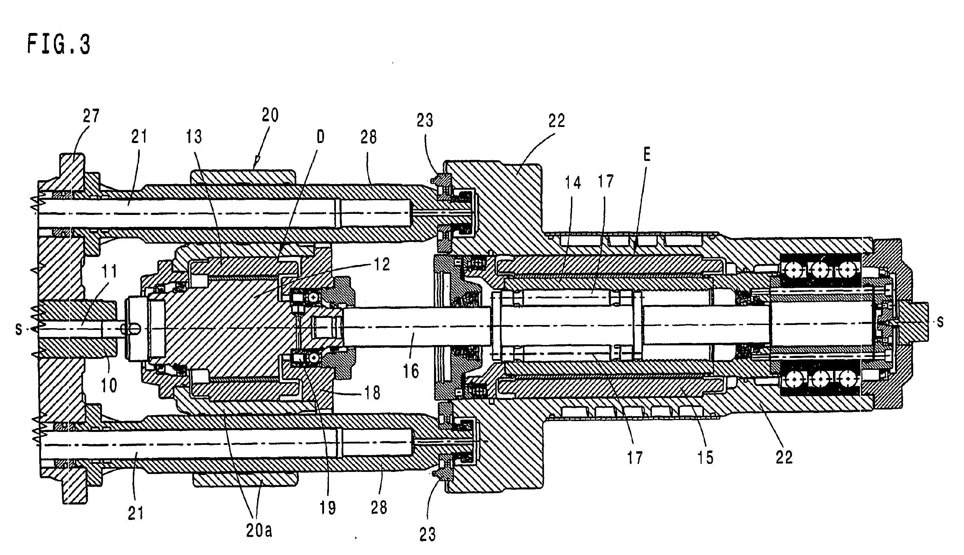

Die Figuren zeigen eine Spritzgießeinheit für eine Spritzgießmaschine zur Verarbeitung von Kunststoffen und anderen plastifizierbaren Massen wie pulvrigen oder keramischen Massen. Die Spritzgießeinheit hat im Wesentlichen einen üblichen Aufbau, das heißt, sie besitzt einen Dosiermotor D, einen Einspritzmotor E und eine Düsenfahreinheit 25. Durch die Düsenfahreinheit 25, die im Ausführungsbeispiel durch eine Kolbenzylindereinheit gebildet ist, deren Kolben auf den Holmen 21 gelagert ist, wird die Spritzgießeinheit an einen Formträger 26 und einen Anguss für einen Hohlraum 24 in einer Spritzgießform M angelegt. Andere Antriebsarten für die Düsenfahreinheit sind denkbar. Der elektromechanische Dosiermotor D dient zum Drehen der Förderschnecke 11 beim Dosieren des plastifizierbaren Materials. Die Förderschnecke 11 befördert das plastifizierbare Material zunächst in einen Raum vor der Förderschnecke, um im Anschluss beim Einspritzvorgang das Material durch eine axiale Bewegung der Förderschnecke relativ zu einer Plastifiziereinheit das plastifizierte Material in den Formhohlraum 24 der Spritzgießform M ein zu spritzen. Zu diesem Zweck ist die Plastifiziereinheit 10 in der Spritzgießeinheit über ein Abstützelement 27 gelagert. Der elektromechanische Dosiermotor D weist einen Rotor 12 und einen Stator 13 auf, wobei die Förderschnecke 11 gemäß Fig. 3 über einen Verbindungsbereich mit dem Rotor des Dosiermotors axial und radial fest gekoppelt ist.

Zur Axialbewegung der Förderschnecke 11 ist der elektromechanische Einspritzmotor E vorgesehen. Der Einspritzmotor E weist einen Spindelantrieb mit einer Spindel 16 auf, welcher über eine Spindelmutter mit der Spindel in Wirkverbindung steht und in einem Abstützelement 22 gelagert ist.

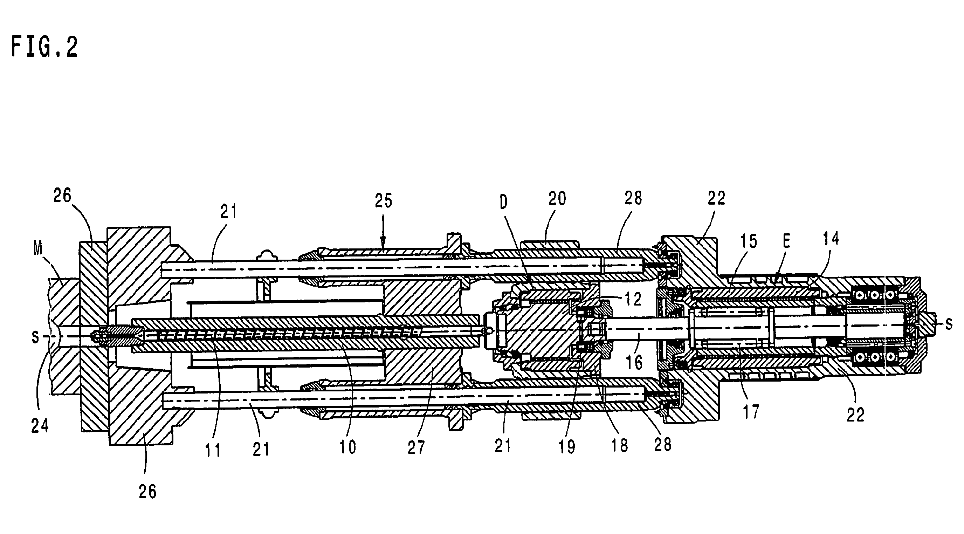

Gemäß Fig. 2 und 3 fluchten die Achsen des Dosiermotors D und des Einspritzmotors E miteinander. Die Spindel 16 des Einspritzmotors E ist mit dem Rotor 12 des Dosiermotors fest verbunden, so dass die Drehbewegung des Rotors 12 des Dosiermotors grundsätzlich auch zu einer Drehbewegung der Spindel 16 führt und umgekehrt. Die Spindel 16 kann nun eine rotatorische Kraft bzw. Bewegung in eine lineare Kraft bzw. Bewegung umsetzen, wenn entsprechend ihrer Spindelsteigung eine der gewünschten Vorschubkraft entsprechende rotatorische Drehmomentabstützung vorgesehen ist. Für diese Drehmomentabstützung wird in die Vorzugskraftrichtung "Einspritzen" ein Freilauf 19 als Bremsmittel in den Dosiermotor D integriert, während für die Rückzugsrichtung der Förderschnecke aktiv mit dem Dosiermotor selbst gebremst wird. Um die Bewegung des Einspritzmotors vom Dosiermotor zu entkoppeln, ist das Bremsmittel, das im Ausführungsbeispiel durch den Freilauf 19 gebildet ist, vorgesehen, das den Dosiermotor D in einer Drehrichtung blockiert, bzw. blockieren kann, also ein unidirektionales Drehverhinderungsmittel bildet. Der Freilauf 19 ist im Deckel 18 des Dosiermotors D gelagert. Gemäß Fig. 3 ist dieser Deckel seinerseits wiederum in der Einspritzbrücke 20 gelagert, die durch die Bewegung des Einspritzmotors E entlang der Spritzachse s-s axial bewegbar ist. Die Spritzachse s-s der Spritzgießeinheit fluchtet ebenfalls mit den Achsen von Dosiermotor D und Einspritzmotor E.

An den vom Dosiermotor D nach außen ragenden Flanken 20a der Einspritzbrücke 20 sind die Holme 21 gelagert, über die die Spritzgießeinheit an einem Formträger 26 abgestützt ist. Diese Holme sind rückseitig mit dem Abstützelement 22 verbunden, das seinerseits das Widerlager für den Einspritzantrieb bildet. Das Abstützelement 22 liegt damit aus Sicht der Plastifiziereinheit 10 hinter dem Dosiermotor D. In diesem Abstützelement ist der Stator 15 des Einspritzmotors E gelagert, der den mit einem Innengewinde versehenen Rotor 14 bei Betrieb antreibt. Mit dem Innengewinde des Rotors 14 stehen Planeten 17 in Wirkverbindung, die Ihrerseits mit ihrem Außengewinde mit dem Außengewinde der Spindel 16 in Eingriff stehen. Der Einspritzmotor E ist durch einen Hohlwellenmotor gebildet, der von der Spindel 16 durchgriffen ist. Die Mutter des Spindelantriebs für die Einspritzbewegung ist im Rotor 14 des Einspritzmotors gelagert oder wie im Ausführungsbeispiel durch den Rotor 14 des Einspritzmotors gebildet.

Abstützelement 22 und Verbindungselemente 28, in denen die Holme 21 teilweise aufgenommen sind, bilden einen Kraftrahmen, wobei im Übergangsbereich zwischen den Verbindungselementen 28 und dem Abstützelement 22 Kraftmessmittel 23 zur Messung insbesondere des Stau- und Einspritzdrucks vorgesehen sind. Das Kraftmessmittel kann vorzugsweise durch Kraftmessmembranen ausgebildet sein.

Die Vorrichtung arbeitet wie folgt:
Im Ausführungsbeispiel wird die axiale Schneckenbewegung durch die Spindel 16 des Einspritzantriebs mit rotativ angetriebener Spindelmutter 14 erzeugt. Die Spindel kann nur eine axiale Vor-Zurück-Kraft erzeugen, wenn sie entsprechend ihrer Spindelübersetzung eine Drehmomentgegenkraft erfährt. Diese Drehmomentgegenkraft wird in der Hauptkraftrichtung der Einspritzbewegung durch den im Dosiermotorgehäuse integrierten Dosiermotor D gebildet. Für die Schneckenrückwärtsbewegung wird die Drehmomentgegenkraft durch entsprechend geregeltes aktives Bestromen erzengt.

### Bezugszeichenliste

- 10: Plastifiziereinheit
- 11: Förderschnecke
- 12: Roter von D
- 13: Stator von D
- 14: Rotor von E
- 15: Stator von E
- 16: Spindel
- 17: Planeten
- 18: Deckel von D
- 19: Freilauf
- 20: Einspritzbrücke
- 20a: Flansch
- 21: Holm
- 22: Abstützelement
- 23: Kraftmessmittel
- 24: Hohlraum
- 25: Düsenfahreinheit
- 26: Formträger
- 27: Abstützelement für 10
- 28: Verbindungselement
- D: Dosiermotor
- E: Einspritzmotor
- M: Spritzgießform
- s-s: Spritzachse

## Patentansprüche

1. Spritzgießeinheit für eine Spritzgießmaschine zur Verarbeitung von Kunststoffen und anderer plastisierbarer Massen wie pulvrige oder keramische Massen mit
- einer darin aufnehmbaren Plastifiziereinheit (10), in der eine Förderschnecke (11) zum Fördern des plastifizierbaren Materials in einen Hohlraum (24) einer Spritzgießform (M) vorgesehen ist,
- einem elektromechanischen Dosiermotor (D) zum Drehen der Förderschnecke (11) beim Dosieren des plastifizierbaren Materials mit Rotor (12) und Stator (13),
- einem elektromechanischen Einspritzmotor (E) zur Axialbewegung der Förderschnecke (11) relativ zur Plastifiziereinheit (10),
- wobei der Einspritzmotor (E) einen Spindelantrieb mit einer Spindel (16) und einer damit zusammenwirkenden Mutter aufweist,
- wobei die Achsen des Dosiermotors (D) und des Einspritzmotors (E) miteinander fluchten,
**dadurch gekennzeichnet, dass** die Spindel (16) des Einspritzmotor (E) mit dem Rotor (12) des Dosiermotors (D) axial und radial fest verbunden ist und dass der Dosiermotor (D) durch einen in einem Gehäuse (18) des Dosiermotors (D) gelagerten Freilauf (19) in einer Drehrichtung blockierbar ist.

2. Spritzgießeinheit nach Anspruch 1, **dadurch gekennzeichnet, dass** die Förderschnecke (11) mit dem Rotor (12) des Dosiermotors (D) axial und radial fest gekoppelt ist und dass sich Förderschnecke (11), Rotor (12) und Spindel (16) des Einspritzmotors gemeinsam drehen.

3. Spritzgießeinheit nach Anspruch 1 oder 2, **dadurch gekennzeichnet, dass** die Spritzachse (s-s) der Spritzgießeinheit mit den Achsen von Dosiermotor (D) und Einspritzmotor (E) fluchtet.

4. Spritzgießeinheit nach einem der vorhergehenden Ansprüche, **dadurch gekennzeichnet, dass** das Gehäuse (18) des Dosiermotors (D) zum Drehmomentgegenhalt des Freilaufs (19) in einer Einspritzbrücke (20) gelagert ist, in der in vom Dosiermotor nach außen ragenden Flansch (20a) Holme (21) zur Abstützung der Spritzgießeinheit an einem Formträger (26) für die Spitzgießform gelagert sind.

5. Spritzgießeinheit nach einem der vorhergehenden Ansprüche, **dadurch gekennzeichnet, dass** der Einspritzmotor (E) an einer aus Sicht der Plastfiziereinheit (10) hinter dem Dosiermotors (D) liegenden Abstützelement (22) gelagert ist.

6. Spritzgießeinheit nach einem der vorhergehenden Ansprüche, **dadurch gekennzeichnet, dass** der Einspritzmotor (E) durch einen Hohtwellenmotor gebildet ist, der von der Spindel (16) durchgriffen ist.

7. Spritzgießeinheit nach einem der vorhergehenden Ansprüche, **dadurch gekennzeichnet, dass** die Mutter des Spindelantriebs des Einspritzmotors (E) im Rotor (14) des Einspritzmotors gelagert oder durch den Rotor (14) des Einspritzmotors gebildet ist.

8. Spritzgießeinheit nach einem der vorhergehenden Ansprüche, **dadurch gekennzeichnet, dass** im Einspritzmotor (E) ein Planetenantrieb aufgenommen ist.

9. Spritzgießeinheit nach einem der vorhergehenden Ansprüche, **dadurch gekennzeichnet, dass** Abstützelement (22) und zwischen Abstützelement und Einspritzbrücke (25) vorgesehene Verbindungselemente (28) einen Kraftrahmen bilden.

10. Spritzgießeinheit nach einem der vorhergehenden Ansprüche, **dadurch gekennzeichnet, dass** an Verbindungselementen (28) Kraftmessmittel (23) insbesondere zur Messung von Stau- und Einspritzdruck vorgesehen sind.

11. Spritzgießeinheit nach Anspruch 10, **dadurch gekennzeichnet, dass** die Kraftmessmittel (23) durch Kraftmessmembranen gebildet sind.

## Claims

1. An injection moulding unit for an injection moulding machine for processing of plastics materials and other plasticizable materials such as powdery or ceramic masses comprising
- a plasticizing unit (10) that can be accommodated therein and in which there is provided a feed screw (11) for conveying the plasticizable material into a mould cavity (24) of an injection mould (M),
- an electromechanical dosing motor (D) for rotating the feed screw (11) when dosing the plasticizable material comprising a rotor (12) and a stator (13),
- an electromechanical injection motor (E) for the axial movement of the feed screw (11) relative to the plasticizing unit (10),
- wherein the injection motor (E) comprises a spindle drive having a spindle (16) and a nut cooperating therewith,
- wherein the axes of the dosing motor (D) and the injection motor (E) are aligned with one another,
**characterized in that** the spindle (16) of the injection motor (E) is axially and radially rigidly connected to the rotor (12) of the dosing motor (D) and **in that** the dosing motor (D) is blockable in one direction of rotation by a free-wheel device (19) mounted in a housing (18) of the dosing motor (D).

2. An injection moulding unit in accordance with Claim 1, **characterized in that** the feed screw (11) is axially and radially rigidly coupled with the rotor (12) of the dosing motor (D) and **in that** feed screw (11), rotor (12) and spindle (16) rotate in common.

3. An injection moulding unit in accordance with Claim 1 or 2, **characterized in that** the injection axis (s-s) of the injection moulding unit is aligned with the axes of the dosing motor (D) and the injection motor (E).

4. An injection moulding unit in accordance with any of the preceding Claims, **characterized in that** the housing (18) of the dosing motor (D) is mounted in an injection bridge (20) as torque opposing force for the free-wheel drive (19) in which injection bridge columns (21) for supporting the injection moulding unit on a mould carrier (26) for the injection mould are mounted in flanges (20a) projecting outwardly from the dosing motor.

5. An injection moulding unit in accordance with any of the preceding Claims, **characterized in that** the injection motor (E) is mounted on a supporting element (22) which is located behind the dosing motor (D) as seen from the plasticizing unit (10).

6. An injection moulding unit in accordance with any of the preceding Claims, **characterized in that** the injection motor (E) is formed by a hollow shafted motor through which the spindle (16) extends.

7. An injection moulding unit in accordance with any of the preceding Claims, **characterized in that** the nut of the spindle drive of the injection motor (E) is mounted in the rotor (14) of the injection motor or is formed by the rotor (14) of the injection motor.

8. An injection moulding unit in accordance with any of the preceding Claims, **characterized in that** a planetary drive is accommodated in the injection motor (E).

9. An injection moulding unit in accordance with any of the preceding Claims, **characterized in that** a supporting element (22) and connecting elements (28) provided between the supporting element and the injection bridge (25) form a framework of forces.

10. An injection moulding unit in accordance with any of the preceding Claims, **characterized in that** force measuring means (23) are provided on connecting elements (28) for the purposes of measuring back pressure and injection pressure in particular.

11. An injection moulding unit in accordance with Claim 10, **characterized in that** the force measuring means (23) are formed by force measuring diaphragms.

## Revendications

1. Unité de moulage par injection pour une machine de moulage par injection pour le traitement de plastiques et d'autres compositions plastifiables telles que des compositions pulvérulentes ou céramiques, comprenant :
- une unité de plastification (10) pouvant être reçue dans celle-ci, dans laquelle est prévue une vis d'amenée (11) pour amener la matière plastifiable dans une cavité (24) d'un moule de moulage par injection (M),
- un moteur de dosage électromécanique (D) pour faire tourner la vis d'amenée (11) lors du dosage de la matière plastifiable, avec un rotor (12) et un stator (13),
- un moteur d'injection électromécanique (E) pour le mouvement axial de la vis d'amenée (11) par rapport à l'unité de plastification (10),
- le moteur d'injection (E) présentant un entraînement à broche avec une broche (16) et un écrou coopérant avec elle,
- les axes du moteur de dosage (D) et du moteur d'injection (E) coïncidant l'un avec l'autre,
**caractérisée en ce que** la broche (16) du moteur d'injection (E) est connectée fixement axialement et radialement au rotor (12) du moteur de dosage (D) et **en ce que** le moteur de dosage (D) peut être bloqué dans un sens de rotation par une roue libre (19) montée dans un boîtier (18) du moteur de dosage (D).

2. Unité de moulage par injection selon la revendication 1, **caractérisée en ce que** la vis d'amenée (11) est accouplée fixement axialement et radialement au rotor (12) du moteur de dosage (D), et **en ce que** la vis d'amenée (11), le rotor (12) et la broche (16) du moteur d'injection tournent conjointement.

3. Unité de moulage par injection selon la revendication 1 ou 2, **caractérisée en ce que** l'axe d'injection (s-s) de l'unité de moulage par injection coïncide avec les axes du moteur de dosage (D) et du moteur d'injection (E).

4. Unité de moulage par injection selon l'une quelconque des revendications précédentes, **caractérisée en ce que** le boîtier (18) du moteur de dosage (D), pour s'opposer au couple de la roue libre (19), est monté dans un pont d'injection (20) dans lequel des longerons (21), pour supporter l'unité de moulage par injection sur un support de moule (26) pour le moule de moulage par injection, sont montés dans la bride (20a) saillant vers l'extérieur depuis le moteur de dosage.

5. Unité de moulage par injection selon l'une quelconque des revendications précédentes, **caractérisée en ce que** le moteur d'injection (E) est monté sur un élément de support (22) situé derrière le moteur de dosage (D) vu depuis l'unité de plastification (10).

6. Unité de moulage par injection selon l'une quelconque des revendications précédentes, **caractérisée en ce que** le moteur d'injection (E) est formé par un moteur à arbre creux dans lequel s'engage la broche (16).

7. Unité de moulage par injection selon l'une quelconque des revendications précédentes, **caractérisée en ce que** l'écrou de l'entraînement à broche du moteur d'injection (E) est monté dans le rotor (14) du moteur d'injection ou est formé par le rotor (14) du moteur d'injection.

8. Unité de moulage par injection selon l'une quelconque des revendications précédentes, **caractérisée en ce qu'**un entraînement planétaire est reçu dans le moteur d'injection (E).

9. Unité de moulage par injection selon l'une quelconque des revendications précédentes, **caractérisée en ce que** l'élément de support (22) et des éléments de liaison (28) prévus entre l'élément de support et le pont d'injection (25) forment un cadre de forces.

10. Unité de moulage par injection selon l'une quelconque des revendications précédentes, **caractérisée en ce que** des moyens de mesure de force (23), en particulier pour la mesure de la pression de compression et d'injection, sont prévus sur des éléments de liaison (28).

11. Unité de moulage par injection selon la revendication 10, **caractérisée en ce que** les moyens de mesure de force (23) sont formés par des membranes de mesure de force.
